# EUROPEAN PATENT APPLICATION

(11) **EP 1 045 582 A1**
(43) Date of publication of application: **18.10.2000**
(21) Application number: 00303102.8
(22) Date of filing: 12.04.2000
(51) Int. Cl.: H04N 5/445

(54) **Improvements relating to electronic programme guide display**

(30) Priority: 14.04.1999 GB 9908364
(71) Applicant: Pace Micro Technology Ltd, Saltaire, Shipley BD18 3LF (GB)
(72) Inventor: Longhorn, Darren, Farsley, Leeds, LS28 6BG (GB); Hoath, Bill, Altrincham, Cheshire, WA15 0LA (GB); Robson, Glenn, Headingley, Leeds, LS6 2AY (GB)
(74) Representative: Wood, Graham

(57) **Abstract**

The invention relates to the generation of an electronic programme guide (EPG) on screen which is generated from data received at a broadcast data receiver in the premises and connected to a screen. The data which is transmitted is typically transmitted by a broadcaster from a remote location and the information data for the EPG is typically transmitted at intervals. In the present invention, the receiver, upon the selection of a first EPG display by the user, undertakes an analysis of previous selections made by the user and/or the selectable options which are displayed on the current EPG display and predicts the next display or displays, typically further EPG displays, which are likely to be selected by the user. On the basis of the prediction, the receiver identifies whether the data for the predicted displays is already received whereupon the same is stored and/or requests and emulates the request for the predicted EPG display or displays so that the data is received prior to the viewer selection. If the viewer then actually selects one of the predicted displays the information data is retrieved from the memory and the display can be generated with minimum delay.

## Description

The invention to which this application relates is an improvement to an electronic programme guide display of the type which is generated for display on a display screen to indicate programmes which are to be broadcast, the channels on which the programmes are to be broadcast and the times of broadcast.

As the proliferation of broadcast channels which can be viewed via a display screen increases, said broadcast channels being available via any of terrestrial, satellite, digital and/or cable networks, it has become increasingly difficult for all the channels and programme scheduled on the same to be easily provided to be viewed by a viewer. Thus, increasingly, the conventional printed TV listings have become large, bulky and somewhat indecipherable. For this reason, it is now increasingly common to be able to generate an electronic programme guide (EPG) which is displayed on the display screen and can therefore be viewed by the viewer to indicate programmes which are broadcast at the present time, broadcast over the next few hours and days or even weeks. The electronic programme guide is generated by means of the receipt of data which is transmitted along with the audio and video data which make up the programmes, via satellite, digital, terrestrial or cable networks, to a broadcast data receiver which is connected to the display screen in a premises. The receiver receives the broadcast data signals and then separates them into audio, video, EPG and any other functions. The receiver then processes the data to generate audio, video, and/or EPG displays.

One method of performing this is by what is known as private data in which a single or a number of large data segments are delivered to the broadcast data receiver and the said data segments are stored in memory in the broadcast data receiver. This segment of data contains all the data required for an EPG display for all the channels for a certain period of time but the disadvantage of this method is that the broadcast data receiver must be able to store all of the information and the size of memory therefore limits the amount of information which can be available for any given programme. An alternative method is to transmit data segments at more frequent intervals to the broadcast data receiver but there are disadvantages with this method in that the receiver must collect and construct all the data and store it in such a manner so that it is always available for the generation of the EPG on screen. If the data is not available then the broadcast data receiver has to wait for the next transmission of the data before the EPG display can be generated upon receiving a request for the same, which can add significant delay to the generation of the EPG display and irritate the viewer.

The aim of the present invention is to provide a means for displaying an EPG and which includes a means for reference to be made to the EPG which is being shown on screen at any one instant and, from this reference, an analysis carried out to decide which EPG display or displays is/are next most likely to be selected by the viewer for viewing and, on the basis of the analysis, request the receipt of data for the predicted next display so that the data for the display can be stored ready for the generation of the predicted EPG display if it is subsequently selected.

In a first aspect of the invention there is provided a means for generating an EPG on a display screen, said display screen connected to a broadcast data receiver for receiving data which is transmitted thereto from a remote location and said data including data from which the broadcast data receiver can generate an EPG display of information on the display screen characterised in that when the EPG display is generated and displayed on the display screen, the broadcast data receiver performs an analysis of the EPG display and a prediction is made as to the possible display or displays which is/are next possibly required to be displayed following a control selection from the viewer of the current EPG display.

Typically the control selection will be to select one of a range of selectable options which are indicated as being available to the viewer.

Upon the basis of the analysis, the broadcast data receiver can search for and/or request the data required to generate the predicted LPG display or displays and, upon receipt of the required data, collate the same and, in one embodiment generate the EPG display or displays which are predicted such that if the viewer makes a selection of the predicted display or one of the predicted displays the same can be generated on screen with a minimum of delay. The ability to effectively predict the next EPG display or displays to be generated on screen on the basis of the current EPG display and/or past EPG displays means that the delay between a selection being made by the viewer from the current EPG and the generation of the next display relating to the selection is much reduced and the need to await the next occasion upon which the required data is transmitted to the broadcast data receiver is removed.

In one embodiment the analysis is undertaken by the broadcast data receiver with respect to the EPG display at that instant. In a more complex system the analysis may include the currently shown display and also refer to the past history of options selected by the viewer of the apparatus.

Thus, the predicted displays of the EPG and the data required for the same, can be requested, collected and stored in a memory in the receiver so that if a selection is made on the current EPG which requires the generation of one of the predicted EPG displays the same is immediately available for generation from the memory.

In a second aspect of the invention there is provided a broadcast data receiver for the receipt and processing of data broadcast from a remote location and carried to the receiver via any of satellite, cable or terrestrial transmission systems, said broadcast data receiver including processing means to allow the generation of an electronic programme guide (EPG) on a display screen connected with the receiver, said data including data from which the broadcast data receiver can generate an EPG display of information on the display screen and characterised in that when an EPG display is generated and displayed on the display screen, the broadcast data receiver performs an analysis of the EPG display and the viewer selection options available at said display and predicts the possible EPG display or displays which is/are next possibly required to be generated and displayed following the reception of a selection signal identifying one of the available options by the viewer.

In a yet further aspect of the invention there is provided a method of generating an electronic programme guide display on a display screen connected to a broadcast data receiver for the reception of data transmitted from a remote location, said data including data which can be processed to generate the EPG display, said method comprising the steps of:
receiving a signal generated by viewer operated control means to generate an EPG display;
the broadcast data receiver selecting and processing the appropriate data to generate the current EPG display on screen and characterised in that;
once the EPG display is generated, the broadcast data receiver performs an analysis of the viewer selectable options of the current EPG display, and identifies subsequent displays which may be required to be generated in response to the options;
having identified the predicted display or displays, the broadcast data receiver, collects or requests the data required for the same, and stores the same in a memory and, if the viewer selects one of the relevant options, the data for the selected display is retrieved from the memory and used to generate the selected display on screen.

In one embodiment if the data for the predicted display or displays is required to be requested the broadcast data receiver emulates the command which would be sent as if the predicted display had in fact been selected by the viewer.

A specific embodiment of the invention is now described with reference to the accompanying drawing, wherein:-
Figures 1a and b illustrate typical EPG displays; and
Figure 2 illustrates in schematic fashion the system of the current invention.

Electronic programme guides (EPG) use data which provide information to describe programme details to the viewer. The information is received via a broadcast data receiver from the broadcaster or transmitting station which broadcast the programme channels, along with video and audio data which can be used to construct the programmes by the broadcast data receiver. The information for the EPG is provided via a display screen to enable the viewer to view the programme options available at a particular time, information relating to selected programmes and generally decide if they wish to watch a particular programme from the range available. The information can be presented on display in a number of ways but two particular ways are now described in more detail.

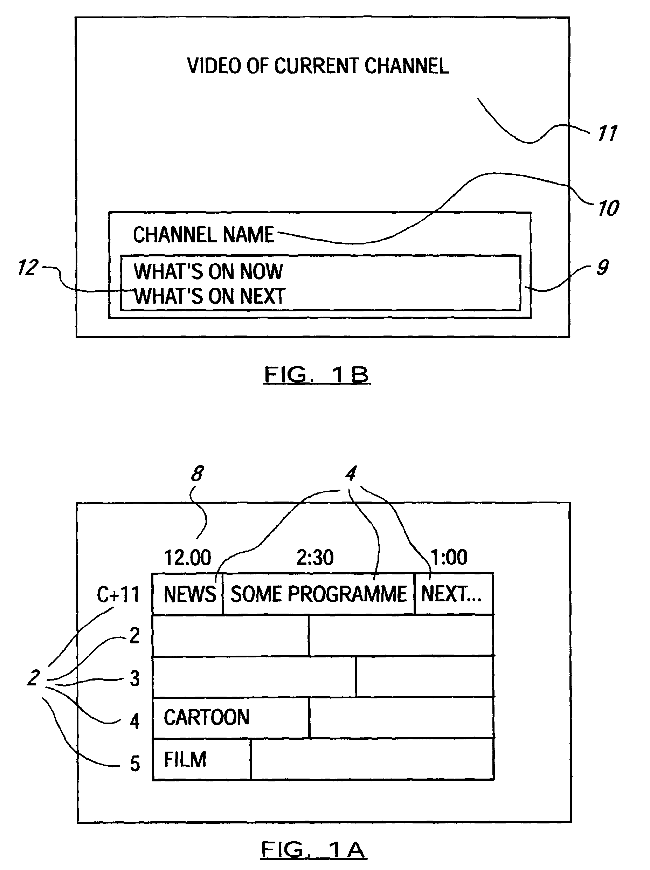

Figure 1 illustrates a first way in which a grid is generated and displayed. The grid shows a portion of the entire programme schedule information for the channels which are available to watch. A series of channels 2 are shown, each of the channels is broken up into a series of cells 4. Each cell relates to a particular programme 6 and, with comparison of the length of the cell to the time bar 8 as indicated, the programme location and broadcast time can be easily assessed.

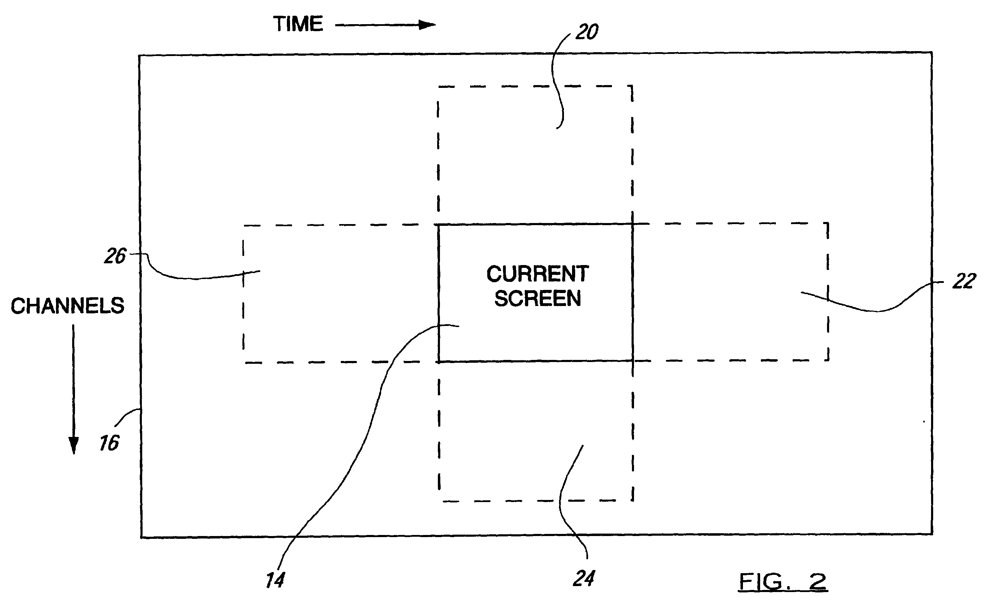

Figure 1b indicates a second way of presentation in which a browser is provided to enable the viewer to check what is on at the present time and next and/or on other channels while watching a particular programme. This display takes the form of a window or box 9 which is generated over the current display 11 and indicates a number of choices, i.e. the channel name 10 which can be selected by the viewer and can indicate what is on the channel at the current time and what is on next 12. In each case however the EPG display is part of a larger EPG information grid as is indicated in figure 2 wherein the EPG information which is currently being displayed on a television set is indicated by the box 14 and the box 16 indicates all of the EPG information available which is shown to be over a significantly longer time period and for significantly more channels than that which is being displayed in box 12.

It will therefore be appreciated that at present, using the conventional system, if the viewer is looking at display 12 and then selects an available option relating to a further EPG display, the broadcast data receiver and processor is required to search all of the data for the information for all of the area 14 to identify the required information based on the selection made by the viewer and then generate the display. This does take time and therefore there is commonly a delay between the selection being made by the viewer from the box 12 and the generation of the appropriate EPG display. This can be particularly prevalent where the EPG data is only transmitted at set intervals to the receiver and the receiver may have to wait until the required data is next transmitted before the required EPG display can be generated.

The current invention allows for a reduction in the time delay by performing an analysis of the subject matter of the display 12 which is being viewed. By doing this, the data processor in the broadcast data receiver will be aware of the selections which can be made by the viewer from the display 12 at that time and then identify, select and/or request the data which is required to generate each of the predicted displays which may result from a viewer selection made from the current display 12. In the example shown the predicted displays are indicated in figure 2 by reference numerals 20, 22, 24 and 26. When the required data for each of the displays 20 to 26 is received it is stored in a memory in the broadcast data receiver. If the viewer makes a selection from the range of EPG display options available on the current display 12 then one of the displays stored as 20 to 26 is required. The broadcast data receiver identifies the selection made and then refers to the memory means so as to generate the appropriate display from the predicted displays 20 to 26 and display the same on the display screen for viewing. This invention therefore allows the collection of data for the generation of the next EPG display to take place prior to the selection of the same without the need for the broadcast data receiver and processor to identify and search for the required data for the display after selection other than in the memory in which the data has already been stored.

When the next display is generated and shown, an analysis of that display will take place for the various EPG display options which could be selected and the next set of predicted EPG display data collected, if required, and so on, and therefore it will be appreciated that this represents a significant ongoing reduction in the delay time between the EPG display being generated and the selection of the same by the viewer. It also allows for significantly greater amounts of information to be selected, requested and received and for the information which is received and stored in the memory to be more closely linked to the viewer selections which are to be made at that time.

It should be appreciated that although in Figure 2, four possible EPG display selections are shown in 20 to 26, it may in some instances be that only one or two possible display options can be selected as the next EPG display or, alternatively, there may be considerably more than four possible options depending on the EPG display which is being viewed at that instant by the viewer. It is also possible that there may be further options available which do not result in the generation of an EPG display such as the option to leave the EPG, display a particular programme and so on. The analysis of these options and collection of data for the same may also be incorporated in a further feature of the invention.

## Claims

1. A means for generating an electronic programme guide (EPG) on a display screen, said display screen connected to a broadcast data receiver for receiving data which is transmitted thereto from a remote location and said data including data from which the broadcast data receiver can generate an EPG display of information on the display screen characterised in that when an EPG display is generated and displayed on the display screen, the broadcast data receiver performs an analysis of the EPG display and a prediction is made as to the possible display or displays which is/are next possibly required to be displayed following a control selection from the viewer of the current EPG display.

2. A means according to claim 1 characterised in that the predicted display or displays are restricted to possible EPG displays.

3. A means according to claim 1 characterised in that upon the basis of the analysis, the receiver searches for and/or requests data which is required to allow the generation of the predicted display or displays identified from the analysis and, upon receipt of the required data stores the same so as to be available for the generation of the display selected by the viewer.

4. A means according to claim 1 characterised in that the prediction of the next EPG display or displays to be generated on screen takes into account the selection options which are available with respect to the EPG display which is being displayed at that instant.

5. A means according to claim 4 characterised in that in addition the analysis takes into account a historical record of viewer selections from previous displays of the same type of the current EPG display.

6. A means according to claim 5 characterised in that the historical record is held in a memory in the broadcast data receiver.

7. A means according to claim 1 characterised in that the predicted display or displays of EPG and the identification of data required for the generation of the same, is requested, collected and stored in a memory in the broadcast data receiver upon the generation of a first EPG display.

8. A means according to claim 7 characterised in that the process is repeated for each subsequent EPG display.

9. A broadcast data receiver for the receipt and processing of data broadcast from a remote location and carried to the receiver via any of satellite, cable or terrestrial transmission systems, said broadcast data receiver including processing means to allow the generation of an electronic programme guide (EPG) on a display screen connected with the receiver, said data including data from which the broadcast data receiver can generate an EPG display of information on the display screen and characterised in that when an EPG display is generated and displayed on the display screen, the broadcast data receiver performs an analysis of the EPG display and the viewer selection options available at said display and predicts the possible EPG display or displays which is/are next possibly required to be generated and displayed following the reception of a selection signal identifying one of the available options by the viewer.

10. A method of generating an electronic programme guide display on a display screen connected to a broadcast data receiver for the reception of data transmitted from a remote location, said data including data which can be processed to generate the EPG display, said method comprising the steps of:
receiving a signal generated by viewer operated control means to generate an EPG display,
the broadcast data receiver selecting and processing the appropriate data to generate the current EPG display on screen and characterised in that
once the EPG display is generated, the broadcast data receiver performs an analysis of the viewer selectable options of the current EPG display, and identifies subsequent displays which may be required to be generated in response to the options;
having identified the predicted display or displays, the broadcast data receiver, collects or requests the data required for the same, and stores the same in a memory and, if the viewer selects one of the relevant options, the data for the selected display is retrieved from the memory and used to generate the selected display on screen.

11. A method according to claim 10 characterised in that if the data for the predicted display or displays is required to be requested the broadcast data receiver emulates the command which would be sent as if the predicted display had in fact been selected by the viewer.
